# EUROPEAN PATENT SPECIFICATION

(11) **EP 1 593 230 B1**
(45) Date of publication and mention of the grant of the patent: **18.10.2006**
(21) Application number: 04708110.4
(22) Date of filing: 04.02.2004
(51) Int. Cl.: H04L 12/14

(54) **Terminating a session in a network**
Beendigung einer Sitzung in einem Netzwerk
Terminason d'une session das un réseau

(30) Priority: 14.02.2003 US 367165
(43) Date of publication of application: 09.11.2005
(73) Proprietor: Cisco Technology, Inc., San Jose, CA 95134 (US)
(72) Inventor: DOMMETY, Gopal, K., San Jose, CA 95134 (US)
(74) Representative: Kazi, Ilya
(86) International application number: PCT/US2004/002995
(87) International publication number: WO 2004/075476

(56) References cited:
- WO-A-97/22936
- US-A1- 2002 015 403
- DROMS R: "RFC2131: Dynamic Host Configuration Protocol" NETWORK WORKING GROUP, March 1997 (1997-03), XP002168114

## Description

### TECHNICAL FIELD OF THE INVENTION

This invention relates generally to the field of network communications and more specifically to terminating a session in a network.

### BACKGROUND OF THE INVENTION

A communication session for a user is typically terminated in order to allow for the availability of session resources and to end accounting charges for the user. A system may terminate a communication session when it detects that a user has explicitly disconnected from a network. A system may disconnect the communication session if the session has been idle for a long time. Other systems may use an Internet Control Message Protocol (ICMP) message or ping message to detect user traffic between a host and a gateway, and disconnect if there is no response.

These known techniques for terminating a communication session, however, are impractical because they are not centrally implemented to allow for coordinated session accounting. Additionally, the proliferation of client side manufacturers has created a myriad of hardware settings and interfaces, which has increased the difficulty of developing a centralized solution for terminating a communication session. Moreover, a user may employ personal firewalls making it impractical to use ping messages for detection or termination of a session. Consequently, known techniques for terminating a communication session are unsatisfactory in certain situations.

The document US 2002/015403 discloses RADIUS accounting system whereby IP address is dynamically allocated and Accounting Stop message is send on call shutdown.

### SUMMARY OF THE INVENTION

In accordance with the present invention, disadvantages and problems associated with previous techniques for terminating a session in a network may be reduced or eliminated.

According to one embodiment, terminating a session in a network includes storing a lease time. A lease request from a mobile node is received. An accounting start message is forwarded to an accounting server, where the accounting start message is operable to initiate accounting and the accounting server is operable to perform accounting functions. If a user re-lease message is not received at the expiration of the lease time, an accounting stop message is transmitted.

Certain embodiments of the invention may provide one or more technical advantages. A technical advantage of one embodiment may be that a session is terminated if a user fails to re-lease a connection before the expiration of a lease time. The lease time may be adjusted to provide for fast termination of a session. Another technical advantage of an embodiment may be that management of an access and disconnect service may be more centralized, which may allow for greater interoperability with client side equipment from different manufacturers. Yet another technical advantage of an embodiment may be that usage detection may be more accurate.

Certain embodiments of the invention may include none, some, or all of the above technical advantages. One or more other technical advantages may be readily apparent to one skilled in the art from the figures, descriptions, and claims included herein.

### BRIEF DESCRIPTION OF THE DRAWINGS

For a more complete understanding of the present invention and its features and advantages, reference is now made to the following description, taken in conjunction with the accompanying drawings, in which:
FIGURE 1 is a block diagram of one embodiment of a network that may use a system and method for terminating a session in a network;
FIGURE 2 is a block diagram illustrating an embodiment of a system for terminating a session in a network;
FIGURE 3 is a flowchart illustrating one embodiment of a method for terminating a session in a network; and
FIGURE 4 is a flow diagram illustrating one embodiment of a call flow for terminating a session in a network.

### DETAILED DESCRIPTION OF THE DRAWINGS

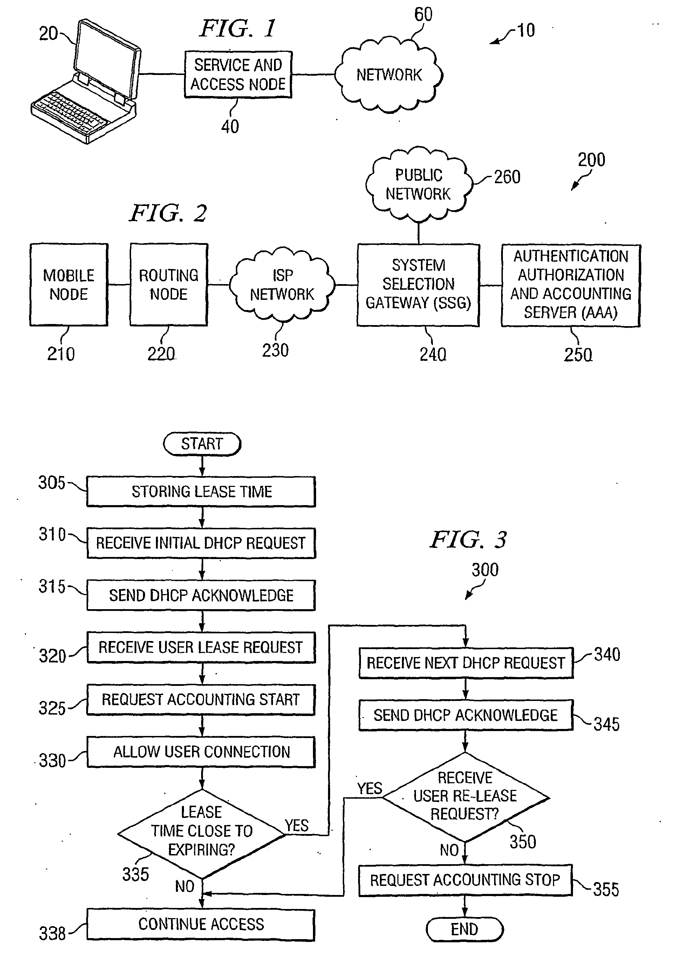

Embodiments of the present invention and its advantages are best understood by referring to FIGURES 1-4 of the drawings, like numerals being used for like and corresponding parts of the various drawings.

FIGURE 1 is a block diagram illustrating one embodiment of a system 10 that may use a system and method for terminating a session in a network. System 10 includes a user 20, a service and access node 40, and a network 60. The elements of system 10 cooperate in a network environment to provide access to user 20 of network 60.

User 20 may request access to network 60 via service and access node 40. User 20 may be defined as any subscriber of system 10 seeking access to a network 60 via a computer, a workstation, a network computer, a wireless data port, a wireless telephone, personal digital assistant, mobile node, one or more processors within these or other devices, or any other suitable device for communicating with network 60. Service and access node 40 may include such components as may be used to authenticate, route, and authorize user 20 to provide access to network 60. Network 60 may comprise a public network, private network, virtual network, Internet, extranet, network gateway, or any combination of the preceding.

According to one embodiment, a communication session is established between user 20 and network 60 when user 20 leases a communication session resource for a predetermined lease time. Service and access node 40 allows user 20 to re-lease the communication session resource to continue accessing network 60. The communication session may be terminated by service and access node 40 if service and access node 40 does not receive a response from user 20 requesting re-lease of the resources. The lease time may be adjusted to provide for fast termination of a session.

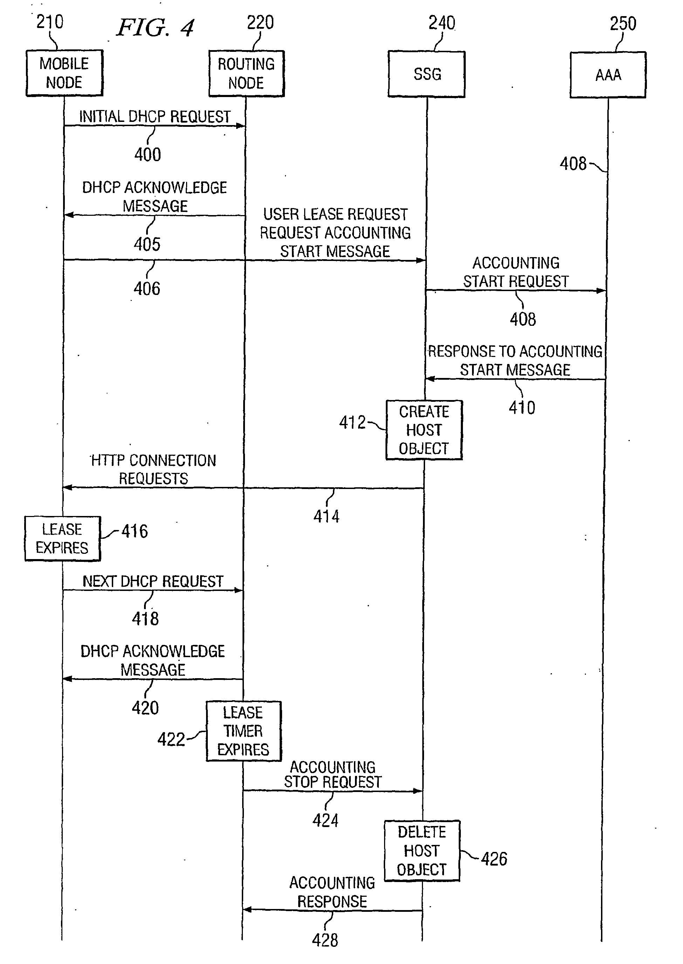

To summarize, system 10 determines whether to terminate a communication session by establishing whether a message requesting re-lease of resources for accessing a public network has been received. One embodiment of a system for terminating a session in a network is described with reference to FIGURE 2. One embodiment of a method for terminating a session in a network is described with reference to FIGURE 3. One embodiment of a call flow for terminating a session in a network is described with reference to FIGURE 4. "Each" as used in this document refers to each member of a set or each member of a subset of a set.

FIGURE 2 is a block diagram illustrating an embodiment of a system 200 for terminating a session in a network. System 200 comprises a mobile node 210, a routing node 220, an Internet Service Provider (ISP) network 230, a service selection gateway (SSG) 240, an authentication, authorization, and accounting server (AAA) 250, and a public network 260. In general, mobile node 210 communicates with routing node 220 to establish a communication session to public access network 260. Routing node 220 ensures that mobile node 210 re-leases communication session resources of system 200 only if a user re-lease message is received from mobile node 210. Otherwise, routing node 220 terminates the communication session.

According to the illustrated example, mobile node 210 initiates a communication session in system 200. Mobile node 210, may comprise a cellular device, a computer, a workstation, a server, a telephone, a personal digital assistance (PDA), or any device, component, network, object, or processor capable of establishing a communication session with a public network 260. Mobile node 210 may include client side equipment, systems, networks, links, sessions, or transports utilizing any Open System Interconnection (OSI) protocol suitable for managing communication sessions by any number of users of system 200. According to one embodiment, mobile node 210 may include OSI Layers 2 or 3, depending on the application. According to one example of an embodiment, a Level 2 (L2) access provides for an open access so there is no L2 authentication.

Routing node 220 manages a communication session between mobile node 210 and public network 260. According to one embodiment, routing node 220 includes a router and a DHCP server. It is understood, however, that routing node 220 may include more, fewer, or none of those elements without departing from the scope of this invention. For example, the DHCP server may be located at another node of system 200. Routing node 220 assigns an IP address to mobile node 210 in response to receiving a DHCP request. It is understood that an IP address is one of many communication session addressing techniques. Any other suitable addressing technique may be used to establish a communication session to public network 260 without departing from the scope of this invention. According to one embodiment, a secured Address Resolution Protocol (ARP) at routing node 220 locks the IP address of mobile node 210 to a Media Access Control (MAC) address of the device being used at mobile node 210.

Routing node 220 assigns a DHCP lease time to the IP address of mobile node 210. The DHCP lease time is configured at the DHCP server for timing the duration of an IP address lease. The DHCP lease time may be configured for short periods of duration, for example, in a range from 0.5 to two minutes, such as one minute. According to one embodiment, a configurable knob may be used to configure the DHCP lease time, for example "int e0 dhcp-lease 60 sec" may be used. The DHCP server stores the DHCP lease time and transmits the DHCP lease time to mobile node 210, where it may be stored, copied, analyzed, displayed, forwarded, captured, re-transmitted, or any other function suitable for establishing a lease time at mobile node 210. The assigned DHCP lease time may be lower than the configured DHCP lease time. The assigned DHCP lease time may be lower than the DHCP lease time requested at the mobile node. For example, if the requested DHCP lease time is lower than the configured DHCP lease time, the DHCP server propagates the requested DHCP lease time.

Routing node 220 is operable to initiate accounting charges for the communication session. According to one embodiment, routing node 220 sends a request accounting start message to SSG 240, which forwards the request to AAA 250. Routing node 220 is operable to terminate a communication session. According to one embodiment, routing node 220 terminates the communication session when routing node 220 does not receive a re-lease message from mobile node 210. It is understood that a re-lease message may be any suitable message from a mobile node 210 requesting continued use of the IP address leased by DHCP server for the communication session. Any other suitable message, request, instruction, command, process, or function suitable for regaining access to public network 60 after a lease time has expired, however, may be used.

Routing node 220 allows a communication session through the ISP network 230 such that SSG 240 may receive and respond to the Hypertext Transfer Protocol (HTTP) requests from mobile node 210. An HTTP request is one example of an information exchange used by mobile node 210 to exchange files on the World Wide Web (WWW). ISP network 230 may comprise an Internet Service Provider (ISP) network, public network, private network, computer, link, exchange, or any other service suitable for providing communication sessions between a routing node 220 and a service selection gateway 240.

SSG 240 is operable to communicate with routing node 220 and AAA 250. According to one embodiment, SSG 240 communicates with AAA 250 to initiate accounting charges for the communication session. SSG 240 creates a host object to provide mobile node 210 with a communication session through system 200. Additionally, SSG 240 is operable to delete a host object to terminate the communication session. According to one embodiment, SSG 240 uses a framed-IP address to delete the host object. SSG 240 may be operable to send the framed-IP address attribute to routing node 220. According to one embodiment, SSG 240 may utilize Remote Access Dial-In User Server (RADIUS) accounting protocol to communicate with routing node 220. Other communication protocols may be used between SSG 240 and routing node 220. For example, system 200 may use Extensible Markup Language (XML) based protocol, Hypertext Markup Language (HTML) based protocol, Peer-to-Peer protocol, or any other protocol suitable for communicating information between routing node 220 and SSG 240.

AAA 250 is operable to communicate with SSG 240. According to one embodiment, AAA 250 may use RADIUS accounting protocol to communicate with SSG 240. Other communication protocols may be used between AAA 250 and SSG 240. For example, system 200 may use Extensible Markup Language (XML) based protocol, Hypertext Markup Language (HTML) based protocol, Peer-to-Peer protocol, or any other protocol suitable for communicating information between AAA 250 and SSG 240. AAA 250 tracks the usage for the communication session. For example, if AAA 250 is using RADIUS to communicate with SSG 240, AAA 250 tracks accounting records for each communication session and determines the use for a user.

Public network 260 may comprise a global computer network such as the Internet, extranet, corporate Virtual Private Network (VPN), local area networks (LANs), metropolitan area networks (MANs), wide area networks (WANs), or any other suitable communication network. According to one embodiment, public network 260 is a public access network. Access to the public network 260 may be achieved via a tunnel, an IP network, a link, or other transfer of data protocol suitable for communicating to a public network 260.

To summarize, a system 200 utilizes a routing node 220 to provide mobile node 210 access to a public network 260. When a lease time expires, routing node 220 determines whether mobile node 210 has requested re-lease of a communication session resource. If mobile node 210 has not requested re-lease, routing node 220 initiates termination of the communication session.

Various modifications, additions, or omissions may be made to system 200 without departing from the scope of the invention. For example, although routing node 220 is illustrated as the node initiating a communication session, any other suitable node may manage DHCP messages to assign IP addresses. As another example, ISP network 230 may be eliminated such that routing node 220 may be coupled with SSG 240. As yet another example, the DHCP server may be in a node separate from routing node 220. Additionally, functions may be performed using any suitable logic comprising software, hardware, other logic, or any suitable combination of the preceding.

FIGURE 3 is a flowchart illustrating one embodiment of a method for terminating a session in a network. The method begins at step 305, where a lease time is stored at routing node 220. According to one embodiment, the lease time comprises a DHCP lease time. The DHCP lease time may be configured to a predetermined amount of time by a default instruction or by a network manager. The lease time may be set to a short duration period, for example, between 0.5 to two minutes, such as approximately one minute. It is understood that any amount of time may be chosen for a DHCP lease time. Decreasing lease times may result in more accurate accounting of each communication session. Decreasing the lease time, however, may increase the number of DHCP requests that may be experienced by system 200.

At step 310, an initial DHCP request is received from mobile node 210. According to one embodiment, routing node 220 receives the initial DHCP request to configure an IP address for the communication session initiated by the DHCP request from mobile node 210. In response to receiving the initial DHCP request, routing node 220 sends a DHCP acknowledge message to mobile node 210 at step 315. A secure ARP feature may be used to lock the ARP entry, mapping the IP address to a MAC address binding.

A user lease request is received at step 320. The user lease request is received by routing node 220, which initiates a communication session that enables mobile node 210 to connect to public network 260. The user lease request may include an HTTP request. According to one embodiment, the HTTP request is received by routing node 220 and is redirected to a Web authorization page. The redirection may be performed by SSG 240 or a Subscriber Service Edge Manager (SESM) of system 200. According to one embodiment, the user lease request may include multiple HTTP requests, for example, multiple Web authentication requests. It is understood that even with Web authentication failure, a user may still have access to an open network at mobile node 210.

SSG 240 requests an accounting start message at step 325. In response to receiving the user lease request, SSG 240 sends an accounting start message from AAA 250. In response to receiving the accounting start message from SSG 240, AAA 250 may perform a user or access authentication and may begin the accounting for the communication session. According to one embodiment, SSG 240 may receive a response from AAA 250 and create a host object. According to another embodiment, SSG 240 may send the host object information to other SESMs.

A user connection is allowed at step 330. According to one embodiment, the user connection may comprise a communication session. For example, a communication session may begin when a user requests access to the Internet, where the transfer of Web pages may be considered the HTTP requests in a communication session. Mobile node 210 is capable at step 330 of receiving a response to the HTTP request made at step 320. Mobile node 220 determines whether the lease time is close to expiring at step 335 to determine whether to send a next DHCP request.

If the lease time is close to expiring at step 335, the method, proceeds to step 340, where routing node 220 receives a next DHCP request. If the lease time has not expired at step 335, the method proceeds to step 338, where mobile node 210 continues to have access to a public network 260. A DHCP server.of routing node 220 may receive the next DHCP request. At step 345, routing node 220 sends a DHCP acknowledge.

A mobile node 210 may send a user re-lease request to routing node 220, to continue the communication session with public network 260. If a user re-lease request is received at step 350, routing node 220 returns to step 338 to continue the communication session between mobile node 210 and public network 260. According to one embodiment, mobile node 210 may initiate a user re-lease request before the lease time has expired. According to another embodiment, the DHCP server may extend the lease time beyond the actual lease time to allow for a grace period.

If a user re-lease request is not received at step 350, the method continues to step 355, where routing node 220 requests an accounting stop from SSG 240. The user re-lease request may not received, for example, if mobile node 210 has disconnected. According to one embodiment, the accounting stop message is sent to SSG 240 with the framed-IP address for the communication session. SSG 240 may terminate the communication session and may send an accounting response based on the framed-IP address attribute. SSG 240 may delete the host object to initiate termination of the communication session. After requesting the accounting stop, the method terminates.

Steps may be added, omitted, modified or performed in any suitable order without departing from the scope of the invention. For example, continuing access at step 338 may be performed substantially simultaneously with allowing user connection at step 330. As another example, a step of forwarding HTTP requests may be added between steps 325 and 350. As yet another example, receiving user lease request at step 320 may be performed substantially simultaneously with requesting accounting start at step 325. Additionally, functions may be performed using any suitable logic comprising software, hardware, other logic, or any suitable combination of the preceding.

FIGURE 4 is a flow diagram illustrating one embodiment of a call flow for terminating a session in a network. The diagram shows mobile node 210, routing node 220, SSG 240, and AAA 250 sending and receiving messages for terminating a session in a network. The call flow begins with an initial DHCP request 400 sent from mobile node 210 to routing node 220. Routing node 220 sends DHCP acknowledge message 405 to mobile node 210 in response to request 400. Mobile node 210 may send a user lease request 406 through routing node 210 to SSG 240. According to one embodiment, request 406 may include a request accounting start message.

In response to the user lease request 406, SSG 240 sends an accounting start request 408 to AAA 250. In response to the accounting start request 408, AAA 250 may send a response to accounting start message 410. Once SSG 240 receives the response from AAA 250, it creates a host object at flow box 412.

Mobile node 210 receives HTTP connection requests 414. At that point, mobile node 210 has access to public network 260. Before the lease expires at flow box 416, mobile node 210 prepares for signaling the time to send a next DHCP request. The time of signaling before lease expiration can be configured as any time prior to the expiration of the lease suitable for preparing for signaling. According to the illustrated embodiment, the signaling can be initiated at half the time of the lease time. The lease time may be configured for short duration in a range of 0.5 to two minutes, for example, approximately one minute.

Routing node 220 receives the next DHCP request 418 from mobile node 210 and sends a DHCP acknowledge message 420 in response to the request 418. A lease timer at the DHCP server expires at flow box 422, indicating that a user lease request was not received from mobile node 210 prior to the expiration of that timer. Routing node 220 sends an accounting stop request 424 to SSG 240. In response to the accounting stop request 424, SSG 240 deletes the host object at flow box 426. The call flow ends with SSG 240 sending an accounting response 428 to routing node 220 to terminate a communication session.

Messages may be added to or omitted from the call flow. For example, a DHCP lease timer message from routing node 220 to mobile node 210 may be added to the call flow. In addition, messages may be modified or performed in any suitable order. For example, accounting start message 406 may be modified to include a user HTTP request. In another example, lease timer expiry at call flow 422 may be performed substantially simultaneously with the lease expiry call flow box 416.

Certain embodiments of the invention may provide one or more technical advantages. A technical advantage of one embodiment may be that a session is terminated if a user fails to re-lease a connection before the expiration of a lease time. The lease time may be adjusted to provide for fast termination of a session. Another technical advantage of an embodiment may be that management of an access and disconnect service may be more centralized, which may allow for greater interoperability with client side equipment from different manufacturers. Yet another technical advantage of an embodiment may be that usage detection may be more accurate.

## Claims

1. A method for terminating a session in network, comprising:
storing (305) a lease time;
receiving a lease request (320) from a mobile node;
forwarding an accounting start message (325) to an accounting server, the accounting start message operable to initiate accounting, the accounting server operable to perform accounting functions; and
transmitting an accounting stop message (355) at the expiration of the lease time if a user re-lease message is not received.

2. The method of Claim 1, further comprising:
receiving an initial Dynamic Host Configuration Protocol, DHCP, request (310); and
receiving a next Dynamic Host Configuration Protocol, DHCP, request (345) in response to expiration of the lease time.

3. The method of Claim 1, wherein the lease time is a predetermined lease expiration time in a range between 0.5 and two minutes.

4. The method of Claim 1, further comprising transmitting a re-lease message in response to expiration of the lease time.

5. The method of Claim 1, further comprising forwarding a lease time to the mobile node, the mobile node capable of storing the lease time.

6. The method of Claim 1, further comprising transmitting a connection request to the mobile node in response to the accounting start message.

7. The method of Claim 1, further comprising disconnecting the mobile node in response to the accounting stop message.

8. A system for terminating a session in a network comprising:
means for storing a lease time;
means for receiving a lease request from a mobile node;
means for forwarding an accounting start message to an accounting server, the accounting start message operable to initiate accounting, the accounting server operable to perform accounting functions; and means for transmitting an accounting stop message at the expiration of the lease time if a user re-lease message is not received.

9. A system according to Claim 8 for terminating a session in a network wherein the means for storing comprises a database operable to store a lease time and the means for receiving, means for forwarding and means for transmitting are provided by a processor.

10. The system of Claim 8 or 9, further operable to:
receive an initial Dynamic Host Configuration Protocol, DHCP, request; and
receive a next Dynamic Host Configuration Protocol, DHCP, request in response to expiration of the lease time.

11. The system of Claim 8 or 9 wherein the lease time is a predetermined lease expiration time in a range between 0.5 and two minutes.

12. The system of Claim 8 or 9, further operable to transmit a re-lease message in response to expiration of the lease time.

13. The system of Claim 8 or 9, further operable to forward a lease time to the mobile node, the mobile node capable of storing the lease time.

14. The system of Claim 8 or 9, further operable to transmit connection requests to the mobile node in response to the accounting start message.

15. The system of Claim 8 or 9, further operable to disconnect the mobile node in response to the accounting stop message.

16. A system according to Claim 8 or 9 for terminating a session in network wherein:
the lease time is a predetermined lease expiration time in a range between 0.5 and two minutes;
the accounting stop message comprises a framed Internet Protocol, IP, address; and the processor is further operable to:
receive an initial Dynamic Host Configuration Protocol, DHCP, request;
transmit a connection message to a mobile node; forward the lease time to the mobile node, the mobile node capable of storing the lease time;
transmit connection requests to the mobile node in response to the accounting start message;
receive a next Dynamic Host Configuration Protocol, DHCP, request in response to expiration of the lease time;
transmit a re-lease message in response to expiration of the lease time; and
disconnect the mobile node in response to the accounting stop message.

17. Logic for terminating a session in a network, the logic embedded in a medium and operable to perform a method according to any of claims 1 to 7.

## Patentansprüche

1. Verfahren zum Beenden einer Sitzung in einem Netzwerk, das umfasst:
Speichern (305) einer Mietzeit;
Empfangen einer Mitanfrage (320) von einem mobilen Knoten; Weiterleiten einer Accounting-Startnachricht (325) an einen Accounting Server, wobei die Accounting-Startnachricht fähig ist, das Accounting zu starten, und der Accounting Server fähig ist, Accounting-Funktionen durchzuführen; und
Übermitteln einer Accounting-Beendigungsnachricht (355) bei Ablauf der Mietzeit, wenn keine Nachricht des Benutzers für erneutes Mieten empfangen wird.

2. Verfahren nach Anspruch 1, das des Weiteren umfasst:
Empfangen einer ersten Dynamic Host Configuration Protocol, DHCP, Anfrage (310), und
Empfangen einer nächsten Dynamic Host Configuration Protocol, DHCP, Anfrage (345) im Ansprechen auf den Ablauf der Mietzeit.

3. Verfahren nach Anspruch 1, wobei die Mietzeit eine vorgegebene Mietablaufzeit in einem Bereich zwischen 0,5 und 2 Minuten ist.

4. Verfahren nach Anspruch 1, das des Weiteren das Übertragen einer Nachricht zum erneuten Mieten im Ansprechen auf den Ablauf der Mietzeit umfasst.

5. Verfahren nach Anspruch 1, das des Weiteren das Weiterleiten einer Mietzeit an den mobilen Knoten umfasst, wobei der mobile Knoten die Mietzeit speichern kann.

6. Verfahren nach Anspruch 1, das des Weiteren das Übertragen einer Verbindungsanfrage an den mobilen Knoten im Ansprechen auf die Accounting-Startnachricht umfasst.

7. Verfahren nach Anspruch 1, das des Weiteren das Trennen des mobilen Knotens im Ansprechen auf die Accounting-Beendingungsnachricht umfasst.

8. System zum Beenden einer Sitzung in einem Netzwerk, das umfasst:
eine Einrichtung zum Speichern einer Mietzeit;
eine Einrichtung zum Empfangen einer Mietanfrage von einem mobilen Knoten;
einer Einrichtung zum Weiterleiten einer Accounting-Startnachricht an einen Accounting-Server, wobei die Accounting-Startnachricht fähig ist, das Accounting zu starten, und der Accounting Server fähig ist, Accounting-Funktionen durchzuführen; und eine Einrichtung zum Übermitteln einer Accounting-Beendigungsnachricht bei Ablauf der Mietzeit, wenn keine Nachricht des Benutzers für erneutes Mieten empfangen wird.

9. System nach Anspruch 8 zum Beenden einer Sitzung in einem Netzwerk, wobei die Einrichtung zum Speichern eine Datenbank umfasst, die fähig ist, eine Mietzeit zu speichern, und wobei die Einrichtung zum Empfangen, die Einrichtung zum Weiterleiten und die Einrichtung zum Übermitteln von einem Prozessor bereitgestellt werden.

10. System nach Anspruch 8 oder 9, das des Weiteren fähig ist:
eine erste Dynamic Host Configuration Protocol, DHCP, Anfrage zu empfangen; und
eine nächste Dynamic Host Configuration Protocol, DHCP, Anfrage im Ansprechen auf den Ablauf der Mietzeit zu empfangen.

11. System nach Anspruch 8 oder 9, wobei die Mietzeit eine vorgegebene Mietablaufzeit im Bereich zwischen 0,5 und 2 Minuten ist.

12. System nach Anspruch 8 oder 9, das des Weiteren fähig ist, eine Nachricht zum erneuten Mieten im Ansprechen auf den Ablauf der Mietzeit zu übermitteln.

13. System nach Anspruch 8 oder 9, das des Weiteren fähig ist, eine Mietzeit an den mobilen Knoten weiterzuleiten, wobei der mobile Knoten die Mietzeit speichern kann.

14. System nach Anspruch 8 oder 9, das des Weiteren fähig ist, Verbindungs-anfragen an den mobilen Knoten im Ansprechen auf die Accounting-Startnachricht zu übermitteln.

15. System nach Anspruch 8 oder 9, das des Weiteren fähig ist, den mobilen Knoten im Ansprechen auf die Accounting-Beendigungsnachricht zu trennen.

16. System nach Anspruch 8 oder 9 zum Beenden einer Sitzung in einem Netzwerk, wobei:
die Mietzeit eine vorgegebene Mietablaufzeit in einem Bereich zwischen 0,5 und 2 Minuten ist;
die Accounting-Beendigungsnachricht eine geframte Internet Protocol, IP, Adresse aufweist; und wobei der Prozessor des Weiteren dazu fähig ist, dass er:
eine erste Dynamic Host Configuration Protocol, DHCP, Anfrage empfängt;
eine Verbindungsnachricht an einen mobilen Knoten überträgt;
die Mietzeit an den mobilen Knoten weiterleitet, wobei der mobile Knoten die Mietzeit speichern kann;
Verbindungsanfragen an den mobilen Knoten im Ansprechen auf die Accounting-Startnachricht übermittelt;
eine nächste Dynamic Host Configuration Protocol, DHCP, Anfrage im Ansprechen auf den Ablauf der Mietzeit empfängt;
eine Nachricht zum erneuten Mieten im Ansprechen auf den Ablauf der Mietzeit übermittelt; und
den mobilen Knoten im Ansprechen auf die Accounting-Beendigungsnachricht trennt.

17. Logik zum Beenden einer Sitzung in einem Netzwerk, wobei die Logik in ein Medium eingebettet ist und fähig ist, ein Verfahren nach einem der Ansprüche 1 bis 7 durchzuführen.

## Revendications

1. Procédé pour terminer une session dans un réseau, comprenant les opérations consistant à :
stocker (305) une durée d'occupation ;
recevoir une demande d'occupation (320) d'un noeud mobile ;
réexpédier un message de démarrage de comptabilisation (325) à un serveur de comptabilisation, le message de démarrage de comptabilisation étant utilisable pour initier la comptabilisation, le serveur de comptabilisation étant utilisable pour effectuer des fonctions de comptabilisation ; et
transmettre un message d'arrêt de comptabilisation (355) à l'expiration de la durée d'occupation si un message de renouvellement d'occupation de l'utilisateur n'est pas reçu.

2. Procédé selon la revendication 1, comprenant en outre les opérations consistant à :
recevoir une demande de protocole DHCP (Dynamic Host Configuration Protocol - protocole de configuration de serveur dynamique) (310) ; et
recevoir une prochaine demande de protocole de configuration de serveur dynamique (DHCP) (345) en réponse à l'expiration de la durée d'occupation.

3. Procédé selon la revendication 1, dans lequel la durée d'occupation est une durée d'expiration d'occupation prédéterminée dans une plage située entre 0,5 et 2 minutes.

4. Procédé selon la revendication 1, comprenant en outre une transmission d'un message de renouvellement d'occupation en réponse à l'expiration de la durée d'occupation.

5. Procédé selon la revendication 1, comprenant en outre une réexpédition d'une durée d'occupation au noeud mobile, le noeud mobile étant capable de stocker la durée d'occupation.

6. Procédé selon la revendication 1, comprenant en outre une transmission d'une demande de connexion au noeud mobile en réponse au message de démarrage de comptabilisation.

7. Procédé selon la revendication 1, comprenant en outre une déconnexion du noeud mobile en réponse au message d'arrêt de comptabilisation.

8. Système destiné à terminer une session dans un réseau comprenant :
des moyens destinés à stocker une durée d'occupation ;
des moyens destinés à recevoir une demande d'occupation d'un noeud mobile ;
des moyens destinés à réexpédier un message de démarrage de comptabilisation à un serveur de comptabilisation, le message de démarrage de comptabilisation étant utilisable pour initier une comptabilisation, le serveur de comptabilisation étant utilisable pour effectuer des fonctions de comptabilisation ; et
des moyens destinés à transmettre un message d'arrêt de comptabilisation à l'expiration de la durée d'occupation si un message de renouvellement d'occupation de l'utilisateur n'est pas reçu.

9. Système selon la revendication 8 destiné à terminer une session dans un réseau dans lequel les moyens de stockage comprennent une base de données pour stocker une durée d'occupation et dans lequel les moyens de réception, les moyens de réexpédition et les moyens de transmission sont fournis par un processeur.

10. Système selon la revendication 8 ou 9 utilisable en outre pour :
recevoir une demande de protocole DHCP (Dynamic Host Configuration Protocol - protocole de configuration de serveur dynamique) ; et
recevoir une prochaine demande de protocole DCHP (protocole de configuration de serveur dynamique) en réponse à l'expiration de la durée d'occupation.

11. Système selon la revendication 8 ou 9, dans lequel la durée d'occupation est une durée d'expiration d'occupation prédéterminée dans une plage située entre 0,5 et 2 minutes.

12. Système selon la revendication 8 ou 9, utilisable en outre pour transmettre un message de renouvellement d'occupation en réponse à l'expiration de la durée d'occupation.

13. Système de la revendication 8 ou 9, utilisable en outre pour réexpédier une durée d'occupation au noeud mobile, le noeud mobile étant capable de stocker la durée d'occupation.

14. Système de la revendication 8 ou 9, utilisable en outre pour transmettre des demandes de connexion au noeud mobile en réponse au message de démarrage de comptabilisation.

15. Système de la revendication 8 ou 9, utilisable en outre pour déconnecter le noeud mobile en réponse au message d'arrêt de comptabilisation.

16. Système selon la revendication 8 ou 9 pour terminer une session dans un réseau dans lequel :
la durée d'occupation est une durée d'expiration d'occupation prédéterminée dans une plage située entre 0,5 et 2 minutes ;
le message d'arrêt de comptabilisation comprend une adresse tramée de protocole Internet (IP) ; et le processeur est utilisable en outre :
pour recevoir une demande de protocole DHCP (Dynamic Host Configuration Protocol - protocole de configuration de serveur dynamique) ;
transmettre un message de connexion à un noeud mobile ; réexpédier la durée d'occupation au noeud mobile, le noeud mobile étant capable de stocker la durée d'occupation ;
transmettre des demandes de connexion au noeud mobile en réponse au message de démarrage de comptabilisation ;
recevoir une prochaine demande DHCP (Dynamic Host Configuration Protocol - protocole de configuration de serveur dynamique) en réponse à l'expiration de la durée d'occupation ;
transmettre un message de renouvellement d'occupation en réponse à l'expiration de la durée ; et
déconnecter le noeud mobile en réponse au message d'arrêt de comptabilisation.

17. Logique destinée à terminer une session dans un réseau, la logique étant intégrée dans un support et utilisable pour effectuer un procédé selon l'une quelconque des revendications 1 à 7.
